# EUROPEAN PATENT APPLICATION

(11) **EP 4 550 024 A1**
(43) Date of publication of application: **07.05.2025**
(21) Application number: 23829656.0
(22) Date of filing: 24.04.2023
(51) Int. Cl.: G02B 27/01

(54) **ADJUSTING DEVICE OF HEAD-MOUNTED ELECTRONIC DEVICE AND HEAD-MOUNTED ELECTRONIC DEVICE HAVING SAME**

(30) Priority: 28.06.2022 CN 202210751339
(71) Applicant: Beijing Zitiao Network Technology Co., Ltd., Beijing 100190 (CN)
(72) Inventor: ZHANG, An, Beijing 100028 (CN); WEN, Yuluo, Beijing 100028 (CN); LAI, Yi, Beijing 100028 (CN); JIA, Wei, Beijing 100028 (CN); GONG, Jianxiong, Beijing 100028 (CN)
(74) Representative: Dentons UK and Middle East LLP
(86) International application number: PCT/CN2023/090264
(87) International publication number: WO 2024/001469

(57) **Abstract**

An adjusting apparatus for a head-mounted electronic device and a head-mounted electronic device having the same. The adjusting apparatus comprises a base assembly, a strap retracting and releasing assembly, and a cable retracting and releasing assembly, wherein the strap retracting and releasing assembly comprises a strap and a telescopic mechanism that cooperates with the strap to drive the strap to move telescopically relative to the base, wherein the cable retracting and releasing assembly comprises a cable and a retracting and releasing mechanism that is provided on the base and comprises a rotary plate and an elastic member, the rotary plate being rotatable relative to the base and cooperating with the cable, and the elastic member applying an action force to the rotary plate to retract the cable; the strap retracting and releasing assembly cooperates in linkage with the cable retracting and releasing assembly to cause in linkage the rotary plate to release the cable against an action force of the elastic member when the strap performs a stretching movement, and to release the rotary plate to cause the rotary plate to retract the cable under the action force of the elastic member when the strap performs a shortening movement.

## Description

### CROSS REFERENCE TO RELATED APPLICATION(S)

The present disclosure claims a priority right to the Chinese patent application No. 202210751339X filed on June 28, 2022 with the Chinses Patent Office, the entire disclosure of which is hereby incorporated by reference in its entirety.

### FIELD

The present disclosure relates to the technical field of head-mounted electronic devices, and particularly to an adjusting apparatus for a head-mounted electronic device and a head-mounted electronic device having the same.

### BACKGROUND

As the virtual reality technology gradually becomes mature, the present disclosure scenarios of head-mounted devices continue to expand to a wider range, such as movies, games, social interaction, etc. However, different people have different head circumferences. Males and females of all ages and different races have different head circumferences. In order to better enhance the user's experience, a function of adjusting the head circumference of the virtual reality head-mounted device is very necessary. The batteries of the virtual reality head-mounted device are typically placed behind the head, and cables are attached to the straps to power the head-mounted device. However, during the adjustment of the straps, the cable is likely to be wound and stuck on the straps or within the battery compartment in the rear so that the size of head-mounted device cannot be adjusted, and even the cable is disconnected and the device cannot be used.

### SUMMARY

The present disclosure aims to solve at least one of the technical problems existing in the prior art. To this end, the present disclosure is to provide an adjusting apparatus for a head-mounted electronic device, wherein said adjusting apparatus can achieve simultaneous retracting and simultaneous release of the cable and strap, and solve problems such as likely entanglement and break of the cable.

The present disclosure further provides a head-mounted electronic device having the above-mentioned adjusting apparatus.

An adjusting apparatus for a head-mounted electronic device according to an embodiment in a first aspect of the present disclosure comprises: a base assembly comprising a base and a power receiving portion provided on the base; a strap retracting and releasing assembly comprising a strap and a telescopic mechanism that cooperates with the strap to drive the strap to move telescopically relative to the base; a cable retracting and releasing assembly comprising a cable and a retracting and releasing mechanism, the cable being provided on the strap to run along the strap, an end portion of the cable being separated from the strap and connected to the power receiving portion, the retracting and releasing mechanism being provided on the base and comprising a rotary plate and an elastic member, the rotary plate being rotatable relative to the base and cooperating with the cable, and the elastic member applying an action force to the rotary plate to retract the cable; wherein the strap retracting and releasing assembly cooperates in linkage with the cable retracting and releasing assembly to cause in linkage the rotary plate to release the cable against an action force of the elastic member when the strap performs a stretching movement, and to release the rotary plate to cause the rotary plate to retract the cable under the action force of the elastic member when the strap performs a shortening movement.

The adjusting apparatus for the head-mounted electronic device according to an embodiment of the present disclosure can achieve simultaneous retracting and simultaneous release of the cable and strap, and solve problems such as likely entanglement and break of the cable.

In some embodiments, the rotary plate is provided with a cable winding post, the cable winding post is provided offset from an axis of rotation of the rotary plate, and the cable is provided around the cable winding post and turns back and extends at the cable winding post.

In some embodiments, the base is provided with a cable-supporting wall extending in a rotation direction of the rotary plate thereon, the cable winding post is located at an outer peripheral region of the cable-supporting wall, the cable extends in a direction from the strap to the power receiving portion, from a side of the cable winding post away from the cable-supporting wall, and turns back to a side of the cable winding post close to the cable-supporting wall.

In some embodiments, the cable-supporting wall comprises a first arc-shaped section and a second arc-shaped section which extend in succession in a circumferential direction of the rotary plate, a radius of the first arc-shaped section is smaller than a radius of the second arc-shaped section, the base further comprises a cable blocking wall thereon, the cable blocking wall is located at an outer peripheral region of the first arc-shaped section, a wiring slot is formed between the cable blocking wall and the first arc-shaped section, and the cable turns back around the cable winding post and then extends towards the power receiving portion via wiring of the wiring slot.

In some embodiments, the base further comprises a first support post thereon, the first support post is provided at an outer peripheral region of one end of the cable blocking wall close to the second arc-shaped section, and the cable, in a direction from the strap to the power receiving portion, extends along the side of the first support post away from the cable blocking wall and then passes around the cable winding post.

In some embodiments, the base further comprises a second support post thereon, the second support post is provided at a side of the first support post away from the cable blocking wall, and the cable, in a direction from the strap to the power receiving portion, passes through a gap between the second support post and the first support post and then passes around the cable winding post.

In some embodiments, the rotary plate is reciprocally rotatable between a first circumferential position and a second circumferential position; when the rotary plate rotates to the first circumferential position, the cable winding post is located outside one end of the cable blocking wall close to the second arc-shaped section; when the rotary plate rotates to the second circumferential position, the cable winding post is located outside one end of the second arc-shaped section away from the first arc-shaped section.

In some embodiments, the rotary plate comprises a rotation shaft portion and a limiting post, the limiting post is provided offset from a rotation axis of the rotary plate, a central axis of the rotation shaft portion is a rotation axis of the rotary plate, the rotation shaft portion is rotatably provided in an inner circumferential region of the cable-supporting wall, the elastic member is a torsion spring sheathed on the rotation shaft portion, a fixed end of the torsion spring is fixed to the cable-supporting wall, a movable end of the torsion spring abuts against the limiting post, and an elastic force is applied to the rotary plate to drive the rotary plate to rotate towards the second circumferential position.

In some embodiments, the telescopic mechanism comprises a knob rotatable relative to the base, the knob fits with the strap and the rotary plate, respectively to drive the strap to perform the stretching movement through forward rotation of the knob, and drive the rotary plate to rotate in a reverse direction against the action force of the elastic member through the forward rotation of the knob so as to release the cable, and drive the strap to perform a shortening movement through the reverse rotation of the knob, and release the rotary plate such that the rotary plate performs reset rotation through the reverse rotation of the knob to cause the cable to retract.

In some embodiments, the telescopic mechanism further comprises a gear, the knob drives the gear to rotate via a transmission unit, the strap is provided with a rack thereon which is in meshing transmission with the gear so as to move the strap when the gear rotates, the transmission unit comprises a toggle portion at an edge of the rotary plate, the toggle portion applies an urging force to the rotary plate when the knob is rotated forward, and the toggle portion removes the urging force to the rotary plate when the knob is rotated reversely.

In some embodiments, the transmission unit is a bi-directional self-locking unit such that the knob is connected to the gear via the bi-directional self-locking unit.

In some embodiments, the bi-directional self-locking unit comprises a ratchet ring, a ratchet wheel and a driving wheel, wherein the ratchet wheel fits with the gear to rotate in synchronization, the driving wheel fits with the knob to rotate in synchronization, the ratchet wheel is fitted in the ratchet ring, and comprises at least one set of driving portion and elastic pawl, a fitting groove is formed between the driving portion and elastic pawl in a same set, the driving wheel comprises a driving block located within the fitting groove, the driving block switches through the change of the rotation direction of the knob to push the driving portion and the elastic pawl; when the driving block pushes the driving portion, the elastic pawl engages with the ratchet ring; when the driving block pushes the elastic pawls, the driving block pushes the elastic pawl to deform to disengage from the ratchet ring.

A head-mounted electronic device according to an embodiment in a second aspect of the present disclosure comprises an adjusting apparatus for a head-mounted electronic device according to an embodiment in the first aspect of the present disclosure.

According to the head-mounted electronic device according to the embodiment of the present disclosure, the reliability of the head-mounted electronic device is improved by providing the adjusting apparatus for the head-mounted electronic device according to the embodiment in the first aspect.

Additional aspects and advantages of the present disclosure will be set forth in part in the description which follows and, in part, will become apparent from the following description, or may be learned by the practice of the present disclosure.

### BRIEF DESCRIPTION OF THE DRAWINGS

FIG. 1 illustrates a perspective view of an adjusting apparatus according to one embodiment of the present disclosure;
FIG. 2 illustrates an assembly view of an inner portion of the adjusting apparatus shown in FIG. 1;
FIG. 3 illustrates a partial enlarged view of the adjusting apparatus shown in FIG. 2;
FIG. 4 illustrates another partial enlarged view of the adjusting apparatus shown in FIG. 2;
FIG. 5 illustrates a schematic view of an operating state of the adjusting apparatus shown in FIG. 2;
FIG. 6 illustrates a cross-sectional view of the adjusting apparatus shown in FIG. 1;
FIG. 7 illustrates a top view showing engagement of a ratchet and a rotary plate shown in FIG. 6;
FIG. 8 illustrates a top assembly view of internal portions of the adjusting apparatus shown in FIG. 6;
FIG. 9 illustrates an exploded bottom view of the inner portions of the adjusting apparatus shown in FIG. 6;
FIG. 10 illustrates a schematic view of the engagement of a ratchet ring, a ratchet and a driving wheel shown in FIG. 9.

### REFERENCE NUMERALS:

A regulating device 100;
A base assembly 1;
A base 11; a cable-supporting wall 111; a first arc segment 1111; a second arc segment 1112;
A cable blocking wall 112; a wiring slot 113; a first support post 114; a second support post 115;
An outer housing wall 116; a power receiving portion 12;
A strap 2; a rack 21;
A knob 31; a coupling shaft 311;
A gear 32; a tooth 321; a rotation shaft 322;
A ratchet ring 331;
A driving wheel 332; a wheel portion 3321; a drive portion 3322; an elastic pawl 3323;
A mating groove 3324; a toggle portion 3325; a shaft portion 3326; a shaft hole 3327;
A driving wheel 333; a drive block 3331;
A cable 4;
A rotary plate 51; a cable winding post 511; a rotation shaft portion 512; a limiting post 513; a central bore 514;
A first circumferential position P1; a second circumferential position P2;
An elastic member 52; a fixed end 521; a movable end 522;
A housing 6; a battery circuit board 7.

### DETAILED DESCRIPTION

Reference will now be made in detail to the embodiments of the present disclosure. Examples of the embodiments are illustrated in the accompanying drawings, wherein like or similar reference numerals refer to the same or similar elements or elements having the same or similar function throughout the description. The embodiments described below with reference to the figures are exemplary and are intended to illustrate the present disclosure and cannot be construed as limiting the present disclosure.

The following disclosure provides many different embodiments or examples for implementing different structures of the present disclosure. To simplify the disclosure of the present disclosure, components and arrangements of specific examples are described below. They are, of course, merely examples and are not intended to limit the present disclosure. Further, the present disclosure may repeat reference numerals and/or letters in different examples. This repetition is for the purpose of simplicity and clarity and does not in itself dictate a relationship between various embodiments and/or arrangements discussed. In addition, the present disclosure provides examples of various specific processes and materials, but one of ordinary skill in the art will recognize the applicability of other processes and/or the use of other materials.

Hereinafter, an adjusting apparatus 100 of a head-mounted electronic device according to an embodiment of the present disclosure will be described with reference to the accompanying drawings.

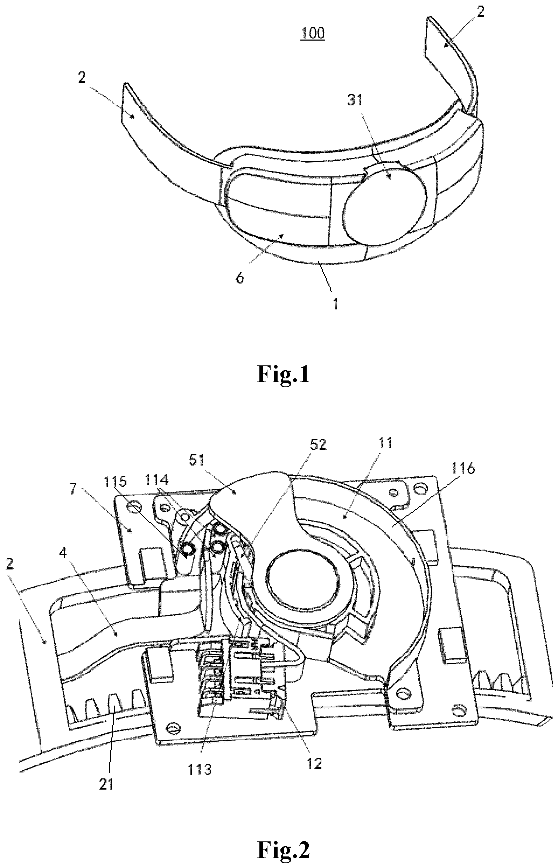

As shown in FIG. 1 and FIG. 2, the adjusting apparatus 100 comprises: a base assembly 1, a strap retracting and releasing assembly and a cable retracting and releasing assembly.

As shown in FIG. 1 and FIG. 2, the base assembly 1 comprises a base 11 and a power receiving portion 12 provided on the base 11; it should be noted that the base 11 may be a non-detachable single piece or an assembly formed by combining multiple separate pieces. In addition, the manner of connection between the power receiving portion 12 and the base 11 is not limited, and the connection may be a direct connection or an indirect connection.

As shown in FIG. 1 and FIG. 2, the strap retracting and releasing assembly comprises a strap 2 and a telescoping mechanism that cooperates with the strap 2 to drive the strap 2 to telescopically move relative to the base 11. That is to say, the telescoping mechanism may drive the strap 2 to move relative to the base 11 in a direction of extension, so that the usable portion of the strap 2 exposed outside the base 11 becomes longer, thereby adapting to be worn by a user with a larger head circumference; the telescoping mechanism may also drive the strap 2 to move in a shortened direction relative to the base 11 so that the usable portion of the strap 2 exposed outside the base 11 is shortened to adapt to a user with a smaller head circumference.

For example, in the examples shown in FIG. 1 and FIG. 2, the strap 2 may comprise two straps respectively placed on two sides of the base 11, and the two straps 2 may be translatable with respect to the base 11. When the two straps 2 are moved towards each other, a portion of each strap 2 overlapping with the base 11 becomes longer, and the usable portion exposed outside the base 11 becomes shorter. This movement is a shortening movement. However, when the two straps 2 are moved away from each other, the portion of each strap 2 overlapping with the base 11 becomes shorter, and the usable portion exposed outside the base 11 becomes longer. This movement is a stretching movement. Of course, the present disclosure is not limited thereto. For example, it is also possible to set one of the above-mentioned two straps 2 to perform the above telescopic movement, and set the other stationary, which will not be described in detail herein.

In addition, the straps 2 may not be translatable. For example, in some embodiments, the straps 2 may also be arranged to be windable at the base 11. When the strap 2 is wound at the base 11, the usable portion exposed outside the base 11 becomes shorter. This movement is the shortening movement; when the strap 2 is unrolled at the base 11, and the usable portion exposed outside the base 11 becomes longer. This movement is the stretching movement. At this time, the number of the straps 2 is not limited. There may be two straps each provided at both sides of the base 11; there may be one strap, and the middle portion of the strap may be wound at the base, and so on. Detailed description will not be presented here any more.

As shown in FIG. 1 and FIG. 2, the cable retracting and releasing assembly comprises a cable 4 and a retracting and releasing mechanism, wherein the cable 4 is provided on the strap 2 to run along the strap 2, and an end portion of the cable 4 is separated from the strap 2 and connected to the power receiving portion 12, that is, a section of the cable 4 near the end portion of the cable 4 may extend out of the strap 2 to be separated from the strap 2, so that the end portion of the cable 4 may extend to the power receiving portion 12 without being restricted by the strap 2, whereby the cable 4 may obtain power supply and/or a control signal, etc. through the connection with the power receiving portion 12. Further, it needs to be appreciated that the relative positional relationship between the cable 4 and the strap 2 is not limited, for example, the cable 4 may be built into the strap 2, or the cable 4 may be exposed outside the strap 2.

In some embodiments, for example as shown in FIG. 1 and FIG. 2, the base 11 is provided with a battery and a battery circuit board 7, the battery is connected to the battery circuit board 7, and the power receiving portion 12 is formed as a plug connector provided on the battery circuit board 7, so that the power supply of the battery may be obtained through the connection of the cable 4 and the power receiving portion 12.

As shown in FIG. 1 and FIG. 2, the retracting and releasing mechanism is provided on the base 11 and comprises a rotary plate 51 and an elastic member 52, wherein the rotary plate 51 is rotatable relative to the base 11 and cooperates with the cable 4, and the elastic member 52 applies a force to the rotary plate 51 to retract the cable 4. That is, a direction in which the elastic member 52 applies the elastic force to the rotary plate 51 is a direction in which the rotary plate 51 retracts the portion of the cable 4 exposed outside of the base 11 (or a direction in which the portion of the cable 4 received in the base 11 becomes longer), rather than a direction in which the portion of the cable 4 exposed outside of the base 11 becomes longer (or a direction in which the portion of the cable 4 received in the base 11 becomes shorter). For example, in the embodiment shown in FIG. 2, the elastic member 52 applies an acting force to the rotary plate 51 to drive the rotary plate 51 to rotate clockwise so that the portion of the rotary plate 51 received into the base 11 becomes longer.

As shown in FIG. 1-FIG. 2, the strap retracting and releasing assembly cooperates with the cable retracting and releasing assembly in linkage such that upon the stretching movement of the strap 2, the linkage rotary plate 51 releases the cable 4 longer against the acting force of the elastic member 52, and upon the shortening movement of the strap 2, the rotary plate 51 is released such that the rotary plate 51 retracts the cable 4 shorter under the acting force of the elastic member 52. That is, the telescopic movement of the strap 2 is associated with the retracting and releasing movement of the cable 4, and the telescopic movement of the strap 2 is in linkage with the retracting and releasing movement of the cable 4.

Thus, when the user operates to make the portion of the strap 2 exposed outside the base 11 become longer, the portion of the linkage cable 4 extending out of the base 11 and exposed outside the base 11 is released longer, thereby avoiding a problem that the cable 4 is not released a sufficient length and is pulled broken. However, when the user operates to shorten the portion of the strap 2 exposed outside the base 11, the linkage cable 4 is retracted towards the interior of the base 11, and the portion exposed outside the base 11 is shortened, thereby avoiding a problem that the cable 4 is damaged when being wound because the strap 2 is retracted shorter and the free amount of the cable 4 becomes longer.

Thus, the adjusting apparatus 100 for a head-mounted electronic device according to an embodiment of the present disclosure may achieve the simultaneous retraction and simultaneous release of the cable 4 and the strap 2, solve the problem that the cable 4 is liable to wind and damage when the strap 2 is making the telescopic movement, and improve the reliability of the head-mounted electronic device. Furthermore, the cable 4 may be automatically received by using only one elastic member 52 without adding a power device, the space occupied by the retracting and releasing mechanism is small, an excessive volume of the battery compartment is avoided, the space utilization rate is high, more space may be reserved for the battery, and the endurance of the head-mounted electronic device may be improved.

In some alternative embodiments, the elastic member 52 keeps the cable 4 always in a tensioned state, thereby better solving the problem of probable winding of the cable 4. It needs to be appreciated that the specific configuration of the elastic member 52 is not limited, and for example, the elastic member 52 may be a torsion spring or a scroll spring, etc.

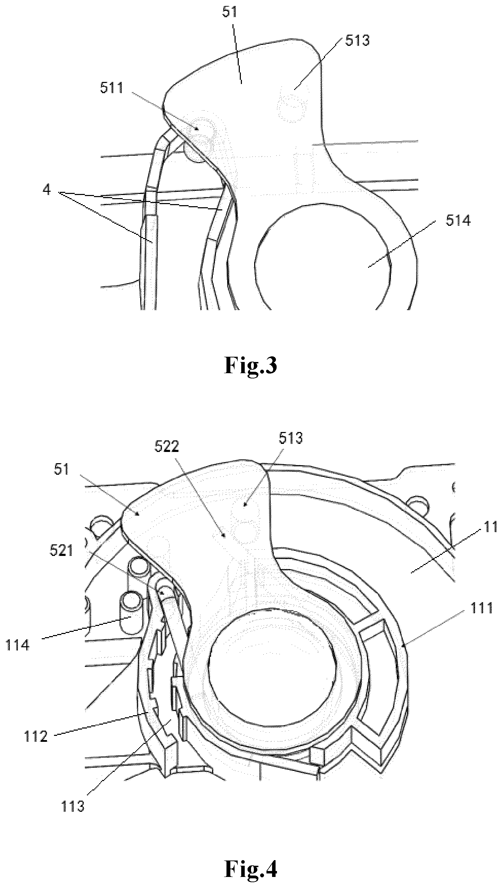

In some embodiments of the present disclosure, as shown in FIG. 2 and FIG. 3, a cable winding post 511 is provided on the rotary plate 51, the cable winding post 511 is provided offset from a rotation axis of the rotary plate 51, and the cable 4 is provided around the cable winding post 511 and turns back and extends at the cable winding post 511. That is, the cable 4 is not fixed to the cable winding post 511 somewhere, but exhibits a turn-back extension at the cable winding post 511, and the turn-back position of the cable 4 continuously changes with the rotation of the rotary plate 51. For example, as shown in FIG. 3, the cable 4 extends in a first direction to the cable winding post 511, and extends generally in a direction opposite to the first direction away from the cable winding post 511 after winding around the cable winding post 511 by half a circumference, thereby enabling the cable 4 to be arranged around the cable winding post 511 and to turn back and extends at the cable winding post 511. Thus, the cable 4 is wound in a manner of double rows of cables. As compared with a manner of a single row of cables, in the manner of double rows of cables, when the rotary plate 51 rotates by a small angle, a relatively long retracting or lengthening effect may be achieved, the rotation range of the rotary plate 51 may be reduced, and the adjustment range of the strap 2 may be increased.

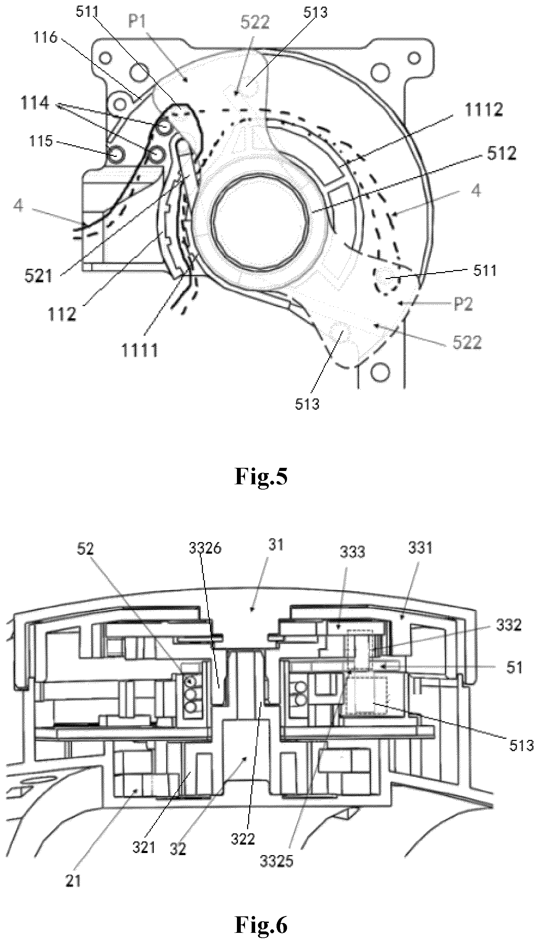

With reference to FIG. 4 and FIG. 5, further, the base 11 comprises a cable-supporting wall 111 extending in a rotation direction of the rotary plate 51 (here, it should be noted that "extending in a rotation direction of the rotary plate 51" is to be understood in a broad sense, and may mean extending in a circumferential direction of the rotary plate 51, or generally in the circumferential direction of the rotary plate 51, and an extending trajectory is not limited to an arc-shaped trajectory coaxial with the rotary plate 51), the cable winding post 511 is located on an outer peripheral region of the cable-supporting wall 111 (namely, located on a side of the cable-supporting wall 111 away from the rotation axis of the rotary plate 51), and the cable 4 extends in a direction from the strap 2 to the power receiving portion 12, from a side of the cable winding post 511 away from the cable-supporting wall 111, and turns back to a side of the cable winding post 511 close to the cable-supporting wall 111. Thus, it is possible to support the cable 4 by the cable-supporting wall 111 and guide regularity of the retracting and releasing movement trajectory of the cable 4, thereby further avoiding the problem about the winding of the cable 4, and it is also possible to, through the extension of the cable-supporting wall 111 in the circumferential direction of the rotary plate 51, further increase the retracting and releasing length of the cable 4, and improve the effectiveness of the change in the retracting and releasing length of the cable 4.

For example, in an alternative example shown in FIG. 4 and FIG. 5, the cable-supporting wall 111 comprises a first arc-shaped section 1111 and a second arc-shaped section 1112 which extend in succession in a circumferential direction of the rotary plate 51, a radius of the first arc-shaped section 1111 is smaller than a radius of the second arc-shaped section 1112, the base 11 further comprises a cable blocking wall 112 thereon, the cable blocking wall 112 is located at an outer peripheral region of the first arc-shaped section 1111, a wiring slot 113 is formed between the cable blocking wall 112 and the first arc-shaped section 1111, and the cable 4 turns back around the cable winding post 511 and then extends towards the power receiving portion 12 via wiring of the wiring slot 113. As a result, the trajectory of the retracting and releasing movement of the cable is made more regular, and tends to be a circular arc line, thereby better avoiding the problem of the winding between the cables 4 and cable 4, and the scratching and interfering problem between the cable 4 and other structural members.

Furthermore, as shown in FIG. 4 and FIG. 5, the base 11 may also have a first support post 114, wherein the first support post 114 is located at an outer peripheral region of one end of the cable blocking wall 112 close to the second arc-shaped section 1112 (namely, on the side away from the rotation axis of the rotary plate 51), and the cable 4 extends along the side of the first support post 114 away from the cable blocking wall 112 in a direction from the strap 2 to the power receiving portion 12, then passes around the cable winding post 511, and then enters between the cable winding post 511 and the cable-supporting wall 111. Thereby, smooth movement of the cable 4 may be ensured, and problems such as friction and damage between different parts of the cable 4 and friction and damage between the cable 4 and the cable blocking wall 112 may be avoided.

Further, as shown in FIG. 2 and FIG. 5, the base 11 further comprises a second support post 115 provided on a side of the first support post 114 away from the cable blocking wall 112, and the cable 4 passes through a gap between the second support post 115 and the first support post 114 and then passes around the cable winding post 511 in a direction from the strap 2 to the power receiving portion 12. Thereby, smooth movement of the cable 4 may be further ensured, and friction and damage between the cable 4 and an outer housing wall 116 of the base 11 may be avoided. Optionally, the base 11 may include the outer housing wall 116 that surrounds the outside of the retracting and releasing mechanism and cable 4 to thereby improve the reliability and effectiveness of the action of the mechanism.

Optionally, as shown in FIG. 5, the rotary plate 51 is reciprocally rotatable between a first circumferential position P1 and a second circumferential position P2 (it is worth mentioning that the rotary plate 51 drawn in a dotted line and the rotary plate 51 drawn in a solid line in FIG. 5 are two states of the rotary plate 51, and do not mean there are two rotary plates 51 on the base 11, and similarly that the cable 4 drawn in a dotted line and the cable 4 drawn in a solid line are also two states of the cable 4, and do not mean that there are two cables 4).

As shown in FIG. 5, when the rotary plate 51 rotates to the first circumferential position P1 (namely, the position where the rotary plate 51 is drawn by the solid line in the figure), the cable winding post 511 is located outside one end of the cable blocking wall 112 close to the second arc-shaped section 1112. At this time, since the distance of the cable winding post 511 from the cable blocking wall 112 is short, the cable 4 is in a lengthened state in which the length in the base 11 becomes shorter. However, when the rotary plate 51 rotates to the second circumferential position P2 (namely, the position where the rotary plate 51 is drawn by the dotted line in the figure), the cable winding post 511 is located outside one end of the second arc-shaped section 1112 away from the first arc-shaped section 1111. At this time, since the distance of the cable winding post 511 from the cable blocking wall 112 is far, the cable 4 is in a shortened state where the length thereof located in the base 11 becomes longer. Thus, by defining the rotatory region of the rotary plate 51 as described above, it is possible to ensure that the range of the rotation angle of the rotary plate 51 is small, which makes it possible to better avoid the problem of the winding of the cable 4, and to facilitate the user's operation of turning a knob 31.

In some embodiments of the present disclosure, the rotary plate 51 comprises a rotation shaft portion 512 and a limiting post 513, wherein a central axis of the rotation shaft portion 512 is a rotation axis of the rotary plate 51, and the limiting post 513 is provided offset from the rotation axis of the rotary plate 51; furthermore, the rotation shaft portion 512 is rotatably provided in an inner peripheral region of the cable-supporting wall 111; the elastic member 52 is a torsion spring sheathed on the rotation shaft portion 512, a fixed end 521 of the torsion spring is fixed to the cable-supporting wall 112, a movable end 522 of the torsion spring abuts against the limiting post 513, and an elastic force is applied to the rotary plate 51 to drive the rotary plate 51 to rotate towards the second circumferential position P2. Thus, the overall structure is compact, occupies a small space, and meets the design requirement that the elastic member 52 applies a force to the rotary plate 51 to shorten the cable 4. For example, the fixed end 521 of the torsion spring may be fixed to an end of the cable blocking wall 112 near the second arc-shaped section 1112, thereby increasing the compactness of the structure and improving the elastic effect of the torsion spring.

In some embodiments of the present disclosure, the telescopic mechanism comprises a knob 31 rotatable relative to the base 11, wherein the knob 31 may fit with the strap 2 and the rotary plate 51, respectively directly or indirectly so as to drive the strap 2 to perform the stretching movement through forward rotation of the knob 31, and drive the rotary plate 51 to rotate in a reverse direction (i.e., a direction opposite to the reset rotation) against the action force of the elastic member 52 through the forward rotation of the knob 31 so as to release the cable 4, and drive the strap 2 to perform the shortening movement through the reverse rotation of the knob 31, and release the rotary plate 51 to perform the reset rotation (i.e., in a direction opposite to the reverse rotation) through the reverse rotation of the knob 31 so that the rotary plate 51 retracts the cable 4 under the force of the elastic member 52.

It should be noted that the specific directions of "forward rotation" and "reverse rotation" described herein are not limited as long as they are the opposite directions, e.g., in the example shown in FIG. 2, the counterclockwise direction is the forward rotation direction and the clockwise direction is the reverse rotation direction. Similarly, the specific directions of "reverse rotation" and "reset rotation" described herein are not limited as long as the directions are opposite, e.g., the counterclockwise direction is the reverse rotation direction and clockwise direction is the reset rotation direction in the example shown in FIG. 5.

Thus, in use, when the user rotates the knob 31 in the forward direction (e.g., in the counterclockwise direction as shown in FIG. 2), the knob 31 will on the one hand drive the strap 2 to move out of the base 11, lengthening the exposed portion, and on the other hand drive the rotary plate 51 to rotate in the reverse direction (e.g., in the counterclockwise direction as shown in FIG. 5) against the action of the elastic member 52, so that the portion of the cable 4 released and exposed to the outside the base 11 becomes longer. As such, since both the strap 2 and cable 4 are lengthened, a problem that the cable 4 is pulled broken since it is released not long enough may be avoided.

However, when the user rotates the knob 31 in the reverse direction (for example, in the clockwise direction as shown in FIG. 2), the knob 31, on the one hand, drives the strap 2 to move inward the base 11 so that the exposed portion shortens, and on the other hand, the knob 31 also releases the rotary plate 51 so that the rotary plate 51 performs the reset rotation under the action of the elastic member 52 (for example, rotate in the clockwise direction as shown in FIG. 5) so that the cable 4 is retracted inward the base 11 so that the exposed portion shortens. Thus, since both the strap 2 and the cable 4 are retracted, the problem that the cable 4 is damaged when being wound because the strap 2 is retracted shorter and the free amount of the cable 4 becomes longer may be avoided.

In this way, through the direct or indirect fitting between the knob 31 and the rotary plate 51, the linkage rotary plate 51 rotates, so that the reliability and effectiveness of the linkage fitting between the strap retracting and releasing assembly and the cable retracting and releasing assembly may be improved, and the structural design may be simplified. Of course, the present disclosure is not so limited, for example, in other embodiments of the present disclosure, when the cable 4 and the strap 2 are relatively fixed for synchronous movement, it may be arranged that the cable 4 is pulled directly by the strap 2 so that the cable 4 pulls the rotary plate 51 to rotate reversely against the action force of the elastic member 52.

For example, in the specific example shown in FIG. 5, when the knob 31 has a fitting relationship with the rotary plate 51, the torsion spring may always provide an action force to the rotary plate 51 to drive the rotary plate 5 to rotate clockwise so that the rotary plate 51 retracts the cable 4; when the strap 2 is shortened to the shortest length, the rotary plate 51 is located at the second circumferential position P2, and the cable 4 is retracted to the shortest state; if the strap 2 is extended, the knob 31 pushes the rotary plate 51 to rotate counterclockwise towards the first circumferential position P1, and the rotary plate 51 compresses the movable end 522 of the torsion spring to move towards the fixed end 521; when the rotary plate 51 moves to the first circumferential position P1, the strap 2 extends the longest, and the cable 4 is released to the longest state.

For another example, if the knob 31 does not have a fitting relationship with the rotary plate 51, the torsion spring may always provide an action force to the rotary plate 51 to drive the rotary plate 51 to rotate clockwise so that the rotary plate 51 retracts the cable 4; when the strap 2 is shortened to the shortest length, the rotary plate 51 is located at the second circumferential position P2, and the cable 4 is retracted to the shortest state; if the strap 2 is extended, the strap 2 pulls the cable 4, the cable 4 pulls the rotary plate 51 to rotate counterclockwise towards the first circumferential position P1, and the rotary plate 51 compresses the movable end 522 of the torsion spring to move towards the fixed end 521; when the rotary plate 51 moves to the first circumferential position P1, the strap 2 extends the longest, and the cable 4 is released to the longest state.

In some embodiments of the present disclosure, as shown in FIG. 6, the telescopic mechanism further comprises a gear 32, the knob 31 drives the gear 32 to rotate via a transmission unit, and the strap 2 is provided with a rack 21 thereon which is in meshing transmission with the gear 32 so as to move the strap 2 when the gear 32 rotates, whereby the telescopic movement of the strap 2 driven by the forward and reverse rotation of the knob 31 may be simply and effectively achieved.

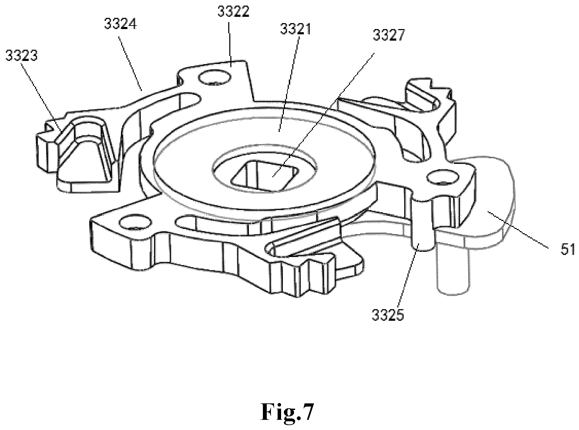

Referring to FIG. 6 through FIG. 8, the transmission unit comprises a toggle portion 3325 at an edge of the rotary plate 51; the toggle portion 3325 applies an urging force to the rotary plate 51 when the knob 31 is rotated forward, and removes the urging force to the rotary plate 51 when the knob 31 is rotated reversely. Thereby, it is possible to simply and effectively lengthen the cable 4 by driving the rotary plate 51 against the action force of the elastic member 52 by the forward rotation of the knob 31, and to release the rotary plate 51 by the reverse rotation of the knob 31 so that the rotary plate 51 retracts the cable 4 under the action force of the elastic member 52.

In some embodiments of the present disclosure, the transmission unit is a bi-directional self-locking unit such that the knob 31 is connected to the gear 32 via the bi-directional self-locking unit. That is to say, the knob 31 may be rotated forward by a suitable angle according to needs, and is self-locked at a corresponding position after the forward rotation, and the knob 31 may also be rotated reversely by a suitable angle according to needs, and is self-locked at a corresponding position after the reverse rotation, so as to satisfy the wearing stability after the user adjusts the strap 2.

It should be appreciated that the specific construction of the bi-directional self-locking unit may be various, and a simple and reliable embodiment of the bi-directional self-locking unit is described below.

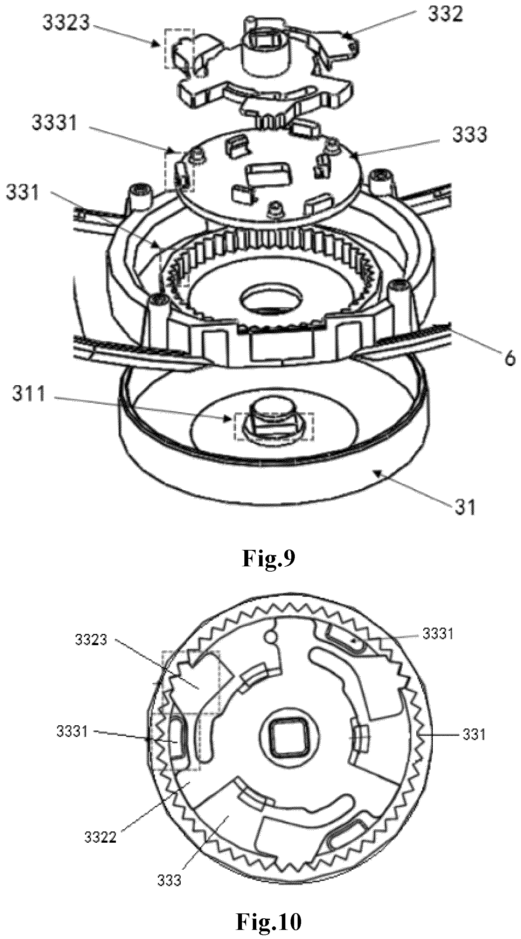

For example, as shown in FIG. 9 and FIG. 10, the bi-directional self-locking unit may include a ratchet ring 331, a ratchet wheel 332 and a driving wheel 333, wherein the ratchet wheel 332 fits with the gear 32 to rotate in synchronization, and the driving wheel 333 fits with the knob 31 to rotate in synchronization. For example, the ratchet wheel 332 may optionally have a polygonal shaft hole 3327, the gear 32 may optionally have a polygonal rotation shaft 322 extending through the shaft hole 3327 for driving engagement, or the shaft hole 3327 and the rotation shaft 322 may optionally be interchanged in position, or a pin may be used to connect the two, etc. For example, the driving wheel 333 is optionally provided with a polygonal through-hole, the knob 31 is provided with a polygonal coupling shaft 311, the coupling shaft 311 passes through the through-hole for driving engagement, or optionally the positions of the through-hole and the coupling shaft 311 are interchanged, or a pin is used to connect both, etc.

For example, the ratchet wheel 332 comprises a wheel portion 3321 and a shaft portion 3326, the gear 32 comprises a tooth portion 321 and a rotation shaft 322, the shaft portion 3326 is formed with a polygonal shaft hole 3327, the rotation shaft 322 is formed as a polygonal section shaft adapted to the shape of the shaft hole 3327, the wheel portion 3321 and the tooth portion 321 are respectively located at two axial sides of the rotary plate 51, the shaft portion 3326 passes through a central hole 514 of the rotary plate 51, and the rotation shaft 322 of the gear 32 passes through the shaft hole 3327, so that the compactness of the overall structure may be improved and a miniaturized design may be achieved.

As shown in FIG. 9 and FIG. 10, the ratchet wheel 332 is fitted in the ratchet ring 331, and comprises at least one set of driving portion 3322 and elastic pawl 3323; a fitting groove 3324 is formed between the driving portion 3322 and elastic pawl 3323 in the same set; the driving wheel 333 comprises a driving block 3331 located within the fitting groove 3324, the driving block 3331 switches through the change of the rotation direction of the knob 31 to push the driving portion 3322 and the elastic pawl 3323; when the driving block 3331 pushes the driving portion 3322, the elastic pawl 3323 engages with the ratchet ring 331; when the driving block 3331 pushes the elastic pawls 3323, the driving block 3331 pushes the elastic pawl 3323 to deform to disengage from the ratchet ring 331.

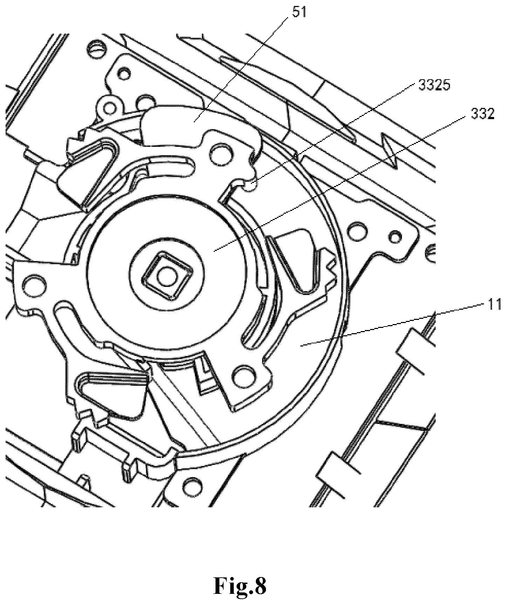

For example, when the knob 31 rotates in a forward direction (for example, rotates in a counterclockwise direction as shown in FIG. 5), the knob 31 drives the driving wheel 333 to rotate in the forward direction, the driving wheel 333 pushes the elastic pawl 3323, the elastic pawl 3323 is disengaged from the ratchet ring 331, and the ratchet wheel 332 also rotates in the forward direction; during the forward rotation of the ratchet wheel 332 (for example, rotate in a counterclockwise direction as shown in FIG. 8), the toggle portion 3325 on the ratchet wheel 332 pushes the rotary plate 51 to rotate in a reverse direction (for example, rotate in a counterclockwise direction as shown in FIG. 8); when the knob 31 stops rotating in the forward direction, the driving wheel 333 stops. The force is no longer applied to the elastic pawl 3323, the elastic pawl 3323 resumes deformation and resumes engagement with the ratchet ring 331, and the ratchet wheel 332 stops rotating, thereby locking the rotation angle of the gear 32 and locking the telescopic length of the strap 2; meanwhile, the rotary plate 51 no longer receives the pushing force of the ratchet wheel 332, and stays at the current rotation position, thereby locking the retracting and releasing length of the cable 4.

When the knob 31 rotates reversely (for example, rotates in a clockwise direction as shown in FIG. 5), the knob 31 drives the driving wheel 333 to rotate reversely, the driving wheel 333 pushes the driving portion 3322, so that the ratchet wheel 332 also rotates reversely, the elastic pawl 3323 is not pushed by the driving block 3331, and may engage with the ratchet ring 331. Furthermore, specifically, during the rotation of the ratchet wheel 332 driven by the driving portion 3322, the elastic pawl 3323 alternately undergoes elastic deformation and resumes elastic deformation guided by engaging teeth surfaces, and changes the engagement position along the circumferential direction of the ratchet ring 331. During the reverse rotation of the ratchet wheel 332 (for example, rotation in the clockwise direction as shown in FIG. 8), the toggle portion 3325 on the ratchet wheel 332 releases the rotary plate 51, the rotary plate 51 performs the reset rotation (for example, rotation in the clockwise direction as shown in FIG. 8) under the action of the elastic member 52; when the knob 31 stops rotating reversely, the driving wheel 333 stops rotating and no longer applies a force to the drive portion 3322, the elastic pawl 3323 engages with the ratchet ring 331, and the ratchet wheel 332 stops rotating, thereby locking the rotation angle of the gear 32 and locking the telescopic length of the strap 2; at the same time, the rotary plate 51 is no longer subjected to the releasing force of the ratchet wheel 332 and stays at the current rotational position to lock the retracting and releasing length of the cable 4.

For example, referring to the specific example shown in FIG. 9-FIG. 10, the knob 31 is provided with a coupling shaft 311 with a square cross-section, and the coupling shaft 311 with a square cross-section cooperates with a through-hole in the middle of the driving wheel 333, so that the knob 31 may drive the driving wheel 333 to rotate forward and backward. The ratchet wheel 332 is provided with an elastic pawl 3323 which may engage with a ratchet tooth in the ratchet ring 331; the driving block 3331 of the driving wheel 333 may run between the elastic pawl 3323 on the ratchet wheel 332 and the driving portion 3322. For example, as shown in FIG. 10, when the knob 31 drives the driving wheel 333 to rotate counterclockwise, due to the elasticity of the elastic pawl 3323, the driving block 3331 may drag the elastic pawl 3323 to switch an engagement position so that the ratchet wheel 332 can rotate counterclockwise; when the knob 31 drives the driving wheel 333 to rotate clockwise, the driving block 3331 of the driving wheel 333 toggles an inclined surface of the elastic pawl 3323, so that the elastic pawl 3323 is disengaged from the ratchet teeth in the ratchet ring 331, thereby disengaging the ratchet teeth, and the ratchet wheel 332 may rotate clockwise, thereby realizing the bi-directional self-locking.

For example, in some embodiments, as shown in FIG. 1 and FIG. 9, the adjusting apparatus 100 may further include a housing 6 fitting with the base 11, the housing 6 and the base 11 together defining a mounting space; in addition to the knob 31, the telescopic mechanism and the retracting and releasing mechanism may be located in the mounting space, and the ratchet ring 331 may be formed on an inner surface of the housing 6, thereby simplifying the structure.

Hereinafter, a head-mounted electronic device according to an embodiment of the present disclosure will be described.

The head-mounted electronic device according to an embodiment of the present disclosure comprises the above-mentioned adjusting apparatus 100 for the head-mounted electronic device. By providing the above-mentioned adjusting apparatus 100, it is convenient to fix the head-mounted electronic device with the head of a wearer, and the head-mounted electronic device may be adapted to users with different head circumference, ensuring the wearing effect of the head-mounted electronic device while improving the versatility of the head-mounted electronic device; furthermore, the adjustment process of the adjusting apparatus 100 is convenient without causing the cable 4 to be wound, so that the reliability of the head-mounted electronic device may be improved.

For example, in some embodiments, the specific type of head-mounted electronic device is not limited, and the head-mounted electronic device may be, for example, a VR/AR device or the like, and may specifically further include an eye cover portion adapted to be worn on a front side of a user's head so as to oppose the eyes, whereas the adjusting apparatus 100 is adapted to be located on a rear side of the user's head, and the adjusting apparatus 100 is connected to the eye cover portion by a strap 2, which will not be described in detail herein.

Other configurations and operations of head-mounted electronic devices according to embodiments of the present disclosure are known to those of ordinary skill in the art and will not be described in detail herein.

In a specific example, the adjusting apparatus 100 comprises a base 11 and a housing 6, the retracting and releasing mechanism of the cable 4 is received in the mounting space defined by the base 11 and the housing 6, the cable 4 is attached to the strap 2, the strap 2 may be retracted or extended during the rotation of the knob 31, and the cable 4 on the strap 2 may also perform the shortening or stretching movement along with the strap 2. The cable 4 starts from the strap 2, passes around the cable winding post 511 on the rotary plate 51, passes through the wiring slot 113, and is connected to the power receiving portion 12 on the battery circuit board 7. Since two ends of the torsion spring are provided between the base 11 and the limiting post 513 of the rotary plate 51, under the action of the torsion spring, the rotary plate 51 may always tighten the cable 4, that is to say, the torsion spring may drive the rotary plate 51 to rotate, and wind the cable 4 on the cable supporting wall 111.

Since the cable 4 is wound on the cable winding post 511 in a winding manner of two rows of cables; under the limited space and the travel of the rotary plate 51, the cable 4 with double length may be wound, the space utilization rate is high, and the adjustment range of the strap 2 is increased. As a result, the cable 4 may be quickly received without causing the cable 4 to be squeezed or tangled during use, causing a problem such as equipment failure or power failure. Furthermore, the overall structure of the adjusting apparatus 100 is simple, the cable 4 may be automatically received by using only one torsion spring without adding a power device, the space occupied by the retracting and releasing mechanism is small, the volume of the battery compartment is avoided to be too large, the space utilization rate is high, more space may be reserved for the battery, and the endurance of the head-mounted electronic device is improved.

In summary, according to the adjusting apparatus 100 according to at least one embodiment of the present disclosure, a reliable and miniaturized telescopic accommodating solution of the cable 4 is provided for solving the problems such as likely entanglement and break of the cable 4 of the current head-mounted electronic device.

In the description of the present disclosure, it is to be understood that the terms "clockwise", "counterclockwise", "axial", "circumferential", and the like refer to orientations or positional relationships based on the orientation or positional relationships depicted in the drawings, merely to facilitate and simplify the description of the present disclosure, and do not indicate or imply that the referenced devices or elements must have a particular orientation, be constructed and operated in a particular orientation, and thus are not to be construed as limiting the present disclosure.

Furthermore, the terms "first" and "second" are used for descriptive purposes only and are not to be construed as indicating or implying relative importance or as implicitly indicating the number of technical features indicated. Thus, a feature modified by "first" or "second" may explicitly or implicitly comprise one or more said features. In the description of the present disclosure, "a plurality" means two or more, unless expressly and specifically limited otherwise.

In the present application, unless otherwise expressly specified and limited, the terms "mount", "connect", "couple", "fix", and the like are to be interpreted broadly, e.g. may be understood as direct connection, as indirect connection through an intermediary, as communication between interiors of two elements, or as interaction relationship between two elements. For a person skilled in the art, the specific meaning of the above terms in the present disclosure can be understood according to specific circumstances. In the present application, unless expressly stated or limited otherwise, "a first feature is above or below a second feature" may mean that the first and second features are in direct contact, or that the first and second features are in indirect contact through an intermediary.

In the depictions of the description, depictions referring to terms "one embodiment", "some embodiments", "an example", "a specific example", or "some examples", etc. means that a particular feature, structure, material, or characteristic described in connection with the embodiment or example is included in at least one embodiment or example of the present disclosure. In this specification, schematic representations of the above terms do not necessarily refer to the same embodiment or example. Furthermore, the particular features, structures, materials, or characteristics described may be combined in any suitable manner in any one or more embodiments or examples. Furthermore, those skilled in the art may combine different embodiments or examples and features of the different embodiments or examples described in this specification without departing from the scope of the invention.

While embodiments of the present disclosure have been shown and described, it will be appreciated by those skilled in the art that numerous variations, modifications, substitutions and changes may be made to these embodiments without departing from the principles and spirit of the present disclosure. The scope of the present application is defined by the claims and their equivalents.

## Claims

1. An adjusting apparatus for a head-mounted electronic device, wherein the adjusting apparatus comprises:
a base assembly comprising a base and a power receiving portion provided on the base;
a strap retracting and releasing assembly comprising a strap and a telescopic mechanism that cooperates with the strap to drive the strap to move telescopically relative to the base;
a cable retracting and releasing assembly comprising a cable and a retracting and releasing mechanism, the cable being provided on the strap to run along the strap, an end portion of the cable being separated from the strap and connected to the power receiving portion, the retracting and releasing mechanism being provided on the base and comprising a rotary plate and an elastic member, the rotary plate being rotatable relative to the base and cooperating with the cable, and the elastic member applying an action force to the rotary plate to retract the cable;
wherein the strap retracting and releasing assembly cooperates in linkage with the cable retracting and releasing assembly to cause in linkage the rotary plate to release the cable against an action force of the elastic member when the strap performs a stretching movement, and to release the rotary plate to cause the rotary plate to retract the cable under the action force of the elastic member when the strap performs a shortening movement.

2. The adjusting apparatus for the head-mounted electronic device according to claim 1, wherein the rotary plate is provided with a cable winding post, the cable winding post is provided offset from an axis of rotation of the rotary plate, and the cable is provided around the cable winding post and turns back and extends at the cable winding post.

3. The adjusting apparatus for the head-mounted electronic device according to claim 2, wherein the base is provided with a cable-supporting wall extending in a rotation direction of the rotary plate thereon, the cable winding post is located at an outer peripheral region of the cable-supporting wall, the cable extends in a direction from the strap to the power receiving portion, from a side of the cable winding post away from the cable-supporting wall, and turns back to a side of the cable winding post close to the cable-supporting wall.

4. The adjusting apparatus for the head-mounted electronic device according to claim 3, wherein the cable-supporting wall comprises a first arc-shaped section and a second arc-shaped section which extend in succession in a circumferential direction of the rotary plate, a radius of the first arc-shaped section is smaller than a radius of the second arc-shaped section, the base further comprises a cable blocking wall thereon, the cable blocking wall is located at an outer peripheral region of the first arc-shaped section, a wiring slot is formed between the cable blocking wall and the first arc-shaped section, and the cable turns back around the cable winding post and then extends towards the power receiving portion via wiring of the wiring slot.

5. The adjusting apparatus for the head-mounted electronic device according to claim 4, wherein the base further comprises a first support post thereon, the first support post is provided at an outer peripheral region of one end of the cable blocking wall close to the second arc-shaped section, and the cable, in a direction from the strap to the power receiving portion, extends along the side of the first support post away from the cable blocking wall and then passes around the cable winding post.

6. The adjusting apparatus for the head-mounted electronic device according to claim 5, wherein the base further comprises a second support post thereon, the second support post is provided at a side of the first support post away from the cable blocking wall, and the cable, in a direction from the strap to the power receiving portion, passes through a gap between the second support post and the first support post and then passes around the cable winding post.

7. The adjusting apparatus for the head-mounted electronic device according to any of claims 4-6, wherein the rotary plate is reciprocally rotatable between a first circumferential position and a second circumferential position; when the rotary plate rotates to the first circumferential position, the cable winding post is located outside one end of the cable blocking wall close to the second arc-shaped section; when the rotary plate rotates to the second circumferential position, the cable winding post is located outside one end of the second arc-shaped section away from the first arc-shaped section.

8. The adjusting apparatus for the head-mounted electronic device according to claim 7, wherein the rotary plate comprises a rotation shaft portion and a limiting post, the limiting post is provided offset from a rotation axis of the rotary plate, a central axis of the rotation shaft portion is a rotation axis of the rotary plate and the rotation shaft portion is rotatably provided in an inner circumferential region of the cable-supporting wall, the elastic member is a torsion spring sheathed on the rotation shaft portion, a fixed end of the torsion spring is fixed to the cable-supporting wall, a movable end of the torsion spring abuts against the limiting post, and an elastic force is applied to the rotary plate to drive the rotary plate to rotate towards the second circumferential position.

9. The adjusting apparatus for the head-mounted electronic device according to any of claims 1-8, wherein the telescopic mechanism comprises a knob rotatable relative to the base, the knob fits with the strap and the rotary plate respectively to drive the strap to perform the stretching movement through forward rotation of the knob, and drive the rotary plate to rotate in a reverse direction against the action force of the elastic member through the forward rotation of the knob so as to release the cable, and drive the strap to perform a shortening movement through the reverse rotation of the knob, and release the rotary plate such that the rotary plate performs reset rotation through the reverse rotation of the knob to cause the cable to retract.

10. The adjusting apparatus for the head-mounted electronic device according to claim 9, wherein the telescopic mechanism further comprises a gear, the knob drives the gear to rotate via a transmission unit, the strap is provided with a rack thereon which is in meshing transmission with the gear so as to move the strap when the gear rotates, the transmission unit comprises a toggle portion at an edge of the rotary plate, the toggle portion applies an urging force to the rotary plate when the knob is rotated forward, and the toggle portion removes the urging force to the rotary plate when the knob is rotated reversely.

11. The adjusting apparatus for the head-mounted electronic device according to claim 10, wherein the transmission unit is a bi-directional self-locking unit such that the knob is connected to the gear via the bi-directional self-locking unit.

12. The adjusting apparatus for the head-mounted electronic device according to claim 11, wherein the bi-directional self-locking unit comprises a ratchet ring, a ratchet wheel and a driving wheel, wherein the ratchet wheel fits with the gear to rotate in synchronization, the driving wheel fits with the knob to rotate in synchronization, the ratchet wheel is fitted in the ratchet ring and comprises at least one set of driving portion and elastic pawl, a fitting groove is formed between the driving portion and elastic pawl in a same set, the driving wheel comprises a driving block located within the fitting groove, the driving block switches through the change of the rotation direction of the knob to push the driving portion and the elastic pawl; when the driving block pushes the driving portion, the elastic pawl engages with the ratchet ring; when the driving block pushes the elastic pawls, the driving block pushes the elastic pawl to deform to disengage from the ratchet ring.

13. A head-mounted electronic device comprising the adjusting apparatus for a head-mounted electronic device according to any of claims 1-12.
